# EUROPEAN PATENT SPECIFICATION

(11) **EP 3 626 939 B1**
(45) Date of publication and mention of the grant of the patent: **02.03.2022**
(21) Application number: 17912502.6
(22) Date of filing: 08.06.2017
(51) Int. Cl.: F01N 13/00, B62J 23/00, F01N 13/18

(54) **MOTORCYCLE MUFFLER HAVING A PROTECING ELEMENT**
MOTORRAD ABGASSCHALLDÄMPFER MIT EINEM SCHUTZELEMENT
SILENCIEUX DE MOTOCYCLES AVEC UN ÉLÉMENT PROTECTEUR

(43) Date of publication of application: 25.03.2020
(73) Proprietor: Beteta Nuñéz, Victor, 28901 Getafe (ES)
(72) Inventor: Beteta Nuñéz, Victor, 28901 Getafe (ES)
(74) Representative: Espiell Gomez, Ignacio
(86) International application number: PCT/ES2017/070419
(87) International publication number: WO 2018/224702

(56) References cited:
- CA-A1- 2 441 557
- CN-Y- 2 142 145
- CN-Y- 2 186 798
- CN-Y- 201 043 487
- ES-A1- 2 570 394
- ES-A1- 2 570 394
- ES-U- 293 578
- GB-A- 2 396 185
- GB-A- 2 396 185
- US-B1- 6 438 949
- DATABASE WPI Thomson Scientific, London, GB; AN 2014-Q70387 & CN 203 669 978 U (WANG GUOXUAN) 25 June 2014 (2014-06-25)

## Description

### OBJECT OF THE INVENTION

The invention refers to a protecting element of the motorcycle muffler that provides to the function to which it is designed, advantages and characteristics of novelty, that are disclosed in details thereafter, which mean an improvement of the current state of the art.

The object of this invention refers to a protecting element of the motorcycle and moped muffler that, consisting in a flexible profile made of heat resistant elastomer, namely silicone, possesses adjustable means to be set tight and perfectly coupled around the muffler pipe constituting a perfect protector of the surface thereof face to eventual blows.

### FIELD OF APPLICATION OF THE INVENTION

The field of application of this invention is within the sector of the industry engaged in producing accessories for motorcycles and mopeds, mainly focusing the scope of the protecting elements, and more concretely those designed to protecting the built-in muffler in the gas exhaust system.

### BACKGROUND OF THE INVENTION

Currently, different elements are known designed to provide protection to the motorcycles and mopeds muffler. However, most of them are rigid, normally metallic elements, that are incorporated coupled on the side of the muffler, such as for example the one disclosed in the utility model ES293578U.

Also, through the patent GB 2396185 A, a muffler protector is known of the type of the one involved herein, conformed by a profile, but that is also a rigid element including a layer of insulating material within the said profile.

Another example of this type of elements is the one disclosed in the patent CA2441557A1, that consists in a profile that is fastened by means of a clamp, however, it has likewise a different constitution from the one preconized herein, as it is neither flexible nor heat resistant.

Likewise, other devices exist designed to be coupled to the muffler of the motorcycles but, unlike the element proposed herein, instead of being designed to prevent blows and to protect the surface of the muffler pipe, they are designed to protect the user from eventual burns produced due to the high temperatures it can reach in the use, therefore they cannot be compared.

Anyway, the main drawback of the existing protectors, when they are rigid, is the lack of capacity of adaptation to different types and/or diameters of the muffler pipe and to their complex installation nature , because generally, as they are rigid and metallic elements, their coupling has to be carried out by means of fastening structures that have to be permanently fixed on the vehicle, so it is usually necessary that professionals intervene for installing them or even having the said elements directly incorporated at the factory. When they are adaptable, the problem with these elements is the low resistance to high temperatures, therefore they use to be conformed out of complex structures of layers among which layers of insulating material are included, that rise the cost of their production but does not ensure a good protection against blows due to fall.

To prevent these drawbacks and provide a protecting element easy to install and effective face to the possibility of blows on the surface of the muffler pipe , that uses to be a chrome-plated element the appearance of which has, to a large extent, an influence on the image of the vehicle, in addition to also affecting its effectiveness, the own applicant is the holder of a patent of invention that, with number ES2570394B1, discloses a protecting device of the motorcycle and mopeds muffler that, unlike those above mentioned, is of a flexible heat-resistant material.

This protector, however, although it satisfactorily overcomes the above-mentioned drawbacks thanks to its flexible constitution of heat-resistant elastomer material, possesses a series of features and limitations that can be improved, namely some features referring to its capacity of adaptation and fixing means, the main objective of this invention being to develop a new protecting element improved in that sense.

On the other hand, and as reference to the current state of the art, it shall be pointed out that, although as it has been evidenced, different types and models of protecting elements of motorcycle mufflers are known in the market, at least the applicant is not aware of the existence of anyone showing technical and structural characteristics equal or similar to those that are concretely shown by the one proposed herein as it is claimed.

### EXPLANATION OF THE INVENTION

The protecting element of the motorcycle muffler of motorcycles that the invention proposes is therefore configured as a novelty within its field of application because, when it is implemented, the above objectives are satisfactorily met, the characterizing details that distinguish it conveniently appearing in the final claims attached to this specification.

Concretely, the protecting element that the invention proposes, as it was stated before, comprises a flexible profile made of heat- resistant elastomer material, namely silicone, designed to be fixed around the muffler pipe of a motorcycle or moped, of the type disclosed in the above-mentioned patent ES2570394B1, constituting a protector of the surface thereof face to eventual blows, for example because of falling from the vehicle, for which it possesses fastening means that, jointly with the said flexible constitution allow that its mounting and installing is simple and quick, even that any user can be able to make it, possessing the feature that, in addition it includes a series of improvements that improve its possibilities of been fixed and its capacity of adaptation to different types and/or diameters of the muffler pipe .

To this aim, and more specifically, the protecting profile, the section of which has a variable configuration, for example rectangular, semicircular or oval, comprises, at least, a longitudinal recess to house the fastening means, consisting in a flange or any other type of fastening means with adjustable tightening, possessing close to, at least, one of its ends, one or more transversal grooves designed to facilitate its cutting, because they create a smaller thickness in the section of the profile and, therefore a weakening of the material that facilitates the said cutting, in order to be able to adapt the length of the profile to different diameters of the muffler.

In addition, the element of the invention envisages the incorporation of a lid that, made of the same material as the rest of the profile, can be coupled on the lowered end of the said profile in which the adjustable tightening lock of the fastening means is housed, for example an hexagonal adjusting screw if it is a metallic flange , so that the said lock remains protected from weathering and moisture.

Last, it shall be pointed out that the above mentioned longitudinal recess that possesses in the profile to house the adjustable tightening means allowing its fixing and adapting around the muffler , is a laterally outwards open recess so that, superficially protecting the said tightening means, that can be metallic or not, it allows inserting and withdrawing them in a practical and simple way, even with the ends partly closed or dismounting them, without fully dismounting the protector is required, as they can be inserted and withdrawn from the side part of the profile, facilitating even more the installation operation.

The protecting element of the motorcycle muffler of the invention consists, therefore, in an innovating device having characteristics unknown up to now for the purpose to which it is designed, reasons that joined to its practical utility, endow it with sufficient ground to obtain the privilege of exclusivity applied for.

### DESCRIPTION OF THE DRAWINGS

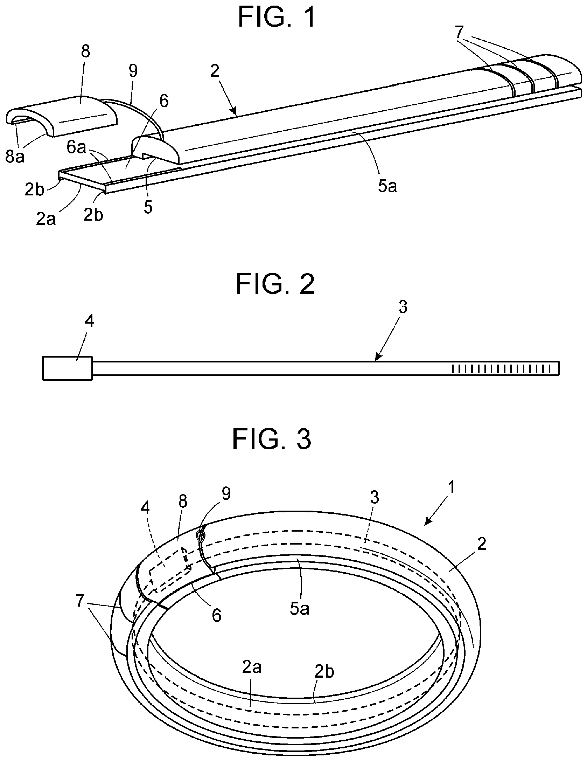

To complement the description being performed and in order to help to a best understanding of the characteristics of the invention, attached to this specification, as an integral part thereof, is a drawing in which the illustrative and no limiting nature has been represented as follows:
The figure number 1.- It shows a perspective view of the profile comprising the protecting element object of the invention, represented in open position and prior to its incorporation in the motorcycle muffler, its general configuration and that of the parts it comprises can be seen;
the figure number 2.- It shows a perspective view of an example of the appropriate adjustable tightening means with which the profile of the element is fixed, according to the invention, also represented in extended and open position before it is placed in the recess of the profile; and
the figure number 3.- It shows a perspective view of the protecting element, according to the invention, after it is mounted and closed, although it has been represented without the muffler being coupled.

### PREFERRED EMBODIMENT OF THE INVENTION

At the sight of the mentioned figures, and according to the numerals adopted, a no limiting example of the protecting element of the invention can be seen, which comprises the parts indicated and disclosed in details below.

Thus, as it can be seen in the said figures, the element (1) of the invention is configured, in a well-known manner, out of a flexible protecting profile (2), made of a heat resistant elastomer material, preferably silicone, having a configuration of variable cross section and a length sufficient to surround the muffler pipe to which it is designed, and a fastening means (3) with an adjustable tightening lock (4) and that is housed in a longitudinal recess (5) of the own profile (2) provided for it, the said lock (4) being located in an offset (6) carried out for that purpose in one of the ends of the profile (2), in an innovating manner being provided to facilitate its adaptation to different diameters of pipe and to allow placing the fastening means (3) in the said longitudinal recess (5), the existence of a series of transversal cutting grooves (7) determining a reduction of the thickness in the section of the profile (2) to facilitate its cutting, an outwards opening (5a) in the longitudinal recess (5) that encompasses its whole length ,for placing or withdrawing the fastening means (3) through it and a lid (8) that is adjusted on the offset (6) of the profile (2) covering the said lock (4) of the fastening means (3).

Preferably, the said fastening means (3) consists in a metallic flange having a hexagonal adjusting screw lock (4) or endless screw, without discarding any other type of flange, for example of plastic material, or fastening type , provided that it can be accommodated in the recess (5) and possesses a lock (4) at its adjustable tightening ends to adapt itself to different diameters of the pipe, the aim of the transversal cutting grooves (7), is to provide the flexible profile (2) with the length suitable for each type of pipe ,without it is necessary to produce them in different sizes.

Preferably, these transversal cutting grooves (7) are located and apart to equidistant distances, close to the ends of the profile (2) opposite to the offset (6) for the location of the lock (4) of the fastening means (3).

For its part, the longitudinal recess (5) of the profile (2) to place the fastening means (3), is preferably located in the central area of the profile (2) and its opening (5a) outwards in the lateral and longitudinal part thereof.

Preferably the lid (8), is a part made of the same flexible material as the rest of the profile (2), and is coupled snap fit on the offset (6) of the end of the said profile (2) in which the lock (4) of the fastening means (3) is located fully covering it, for example by means of protuberances (8a) provided to that purpose on the lower part thereof adapted to fit in a rim edge (6a) complementary to the said offset (6).

In addition, the lid (8) is joined integral with the body of the protecting profile (2) by means of a flexible connecting bridge (9) provided between both parts to avoid its loss.

Last, it shall be pointed out that, optionally, the profile (2) possesses a flat configuration at its lower basis (2a) with two lateral extensions (2b) in its respective longitudinal sides encompassing its full length designed to favor its grip on the surface of the muffler to which it is designed.

The invention is defined by the appended claims.

## Claims

1. Motorcycle muffler having a protecting element (1) comprising a flexible protecting profile (2) made of heat resistant elastomer material, the protecting element (1) consisting of a profile having a variable cross section and a length sufficient to surround a pipe of the muffler, and a fastening means (3) with an adjustable tightening lock (4) that is housed in a longitudinal recess (5) of said profile (2), the said lock (4) being located in an offset (6) carried out to that purpose in one of the ends of the profile (2), where said profile (2) possesses a series of transversal cutting grooves (7) that determine a reduction of the thickness in the section of the profile (2), **characterized by** further comprising a lid (8) adjusted on the offset (6) of the profile (2) covering the lock (4) of the fastening means (3).

2. Motorcycle muffler having a protecting element (1) according to claim 1, wherein said profile (2) possesses an opening (5a) outwards in the longitudinal recess (5) that encompasses its whole length, for placing or withdrawing the fastening means (3) through it

3. Motorcycle muffler having a protecting element (1) according to any of the preceding claims wherein the fastening means (3) consists in a metallic flange having a hexagonal adjusting screw lock (4) or endless screw.

4. Motorcycle muffler having a protecting element (1) according to any of the preceding claims wherein these transversal cutting grooves (7) are located and apart to equidistant distances, close to the end of the flexible profile (2) opposite to the offset (6) for the location of the lock (4) of the fastening means (3).

5. Motorcycle muffler having a protecting element (1) according to any of the preceding claims, wherein the longitudinal recess (5) of the profile (2) to place the fastening means (3), is located in the central area of the profile (2) and its outwards opening (5a) in the lateral part thereof.

6. Motorcycle muffler having a protecting element (1) according to any of the preceding claims, wherein the lid (8), is a part made of the same flexible material as the rest of the profile (2).

7. Motorcycle muffler having a protecting element (1) , according to any of the preceding claims, wherein the lid (8) is coupled and snap fit on the offset (6) of the end of the said profile (2)

8. Motorcycle muffler having a protecting element (1) according to any of the preceding claims, wherein the lid (8) is joined integral with the body of the protecting profile (2) by means of a flexible connecting bridge (9) provided between both parts

9. Motorcycle muffler having a protecting element (1) according to any of the preceding claims wherein the profile (2) possesses a flat configuration at its lower basis (2a) with two lateral extensions (2b) in its respective longitudinal sides encompassing its full length.

## Patentansprüche

1. Motorradschalldämpfer mit einem Schutzelement (1), umfassend ein flexibles Schutzprofil (2) aus wärmebeständigem Elastomermaterial, wobei das Schutzelement (1) aus einem Profil mit variablem Querschnitt und einer ausreichenden Länge besteht, um ein Rohr des Schalldämpfers zu umgeben, und einem Befestigungsmittel (3) mit einer justierbaren Spannverriegelung (4), die in einer Längsausnehmung (5) des Profils (2) untergebracht ist, wobei sich die Verriegelung (4) in einem zu diesem Zweck ausgeführten Versatz (6) in einem der Enden des Profils (2) befindet, wobei das Profil (2) eine Reihe von querverlaufenden Schneidrillen (7) besitzt, die eine Verringerung der Dicke im Abschnitt des Profils (2) bestimmen, **dadurch gekennzeichnet, dass** dieser ferner einen Deckel (8) umfasst, der auf dem Versatz (6) des Profils (2) zum Bedecken der Verriegelung (4) des Befestigungsmittels (3) justiert ist.

2. Motorradschalldämpfer mit einem Schutzelement (1) nach Anspruch 1, wobei das Profil (2) eine Öffnung (5a) nach außen in der Längsausnehmung (5) besitzt, die ihre gesamte Länge umgibt, um das Befestigungsmittel (3) durch diese hindurch einzusetzen oder herauszuziehen

3. Motorradschalldämpfer mit einem Schutzelement (1) nach einem der vorhergehenden Ansprüche, wobei das Befestigungsmittel (3) aus einem Metallflansch mit einer hexagonalen Justierschraubverriegelung (4) oder Endlosschraube besteht.

4. Motorradschalldämpfer mit einem Schutzelement (1) nach einem der vorhergehenden Ansprüche, wobei sich diese querverlaufenden Schneidrillen (7) in gleichen Abständen nahe dem Ende des flexiblen Profils (2) gegenüber des Versatzes (6) für die Anordnung der Verriegelung (4) des Befestigungsmittels (3) befinden.

5. Motorradschalldämpfer mit einem Schutzelement (1) nach einem der vorhergehenden Ansprüche, wobei sich die Längsausnehmung (5) des Profils (2) zum Platzieren des Befestigungsmittels (3) im mittleren Bereich des Profils (2) und seine nach außen gerichtete Öffnung (5a) in dessen lateralen Teil befindet.

6. Motorradschalldämpfer mit einem Schutzelement (1) nach einem der vorhergehenden Ansprüche, wobei der Deckel (8) ein Teil aus dem gleichen flexiblen Material wie der Rest des Profils (2) ist.

7. Motorradschalldämpfer mit einem Schutzelement (1) nach einem der vorhergehenden Ansprüche, wobei der Deckel (8) auf dem Versatz (6) des Endes des Profils (2) gekoppelt und eingerastet ist

8. Motorradschalldämpfer mit einem Schutzelement (1) nach einem der vorhergehenden Ansprüche, wobei der Deckel (8) mit dem Körper des Schutzprofils (2) mittels einer flexiblen Verbindungsbrücke (9) zusammengefügt ist, die zwischen beiden Teilen bereitgestellt ist

9. Motorradschalldämpfer mit einem Schutzelement (1) nach einem der vorhergehenden Ansprüche, wobei das Profil (2) eine flache Konfiguration an seiner unteren Grundfläche (2a) mit zwei lateralen Erweiterungen (2b) in seinen jeweiligen Längsseiten, die seine vollständige Länge einnehmen, besitzt.

## Revendications

1. Silencieux de motocyclette ayant un élément de protection (1) comprenant un profil de protection flexible (2) fait de matériau élastomère résistant à la chaleur, l'élément de protection (1) consistant en un profil ayant une section transversale variable et une longueur suffisante pour entourer un tuyau du silencieux, et un moyen de fixation (3) avec un verrou de serrage ajustable (4) qui est logé dans un renfoncement longitudinal (5) dudit profil (2), ledit verrou (4) étant situé dans un décalage (6) réalisé à cet effet dans l'une des extrémités du profil (2), où ledit profil (2) possède une série de rainures de coupe transversales (7) qui déterminent une réduction de l'épaisseur dans la section du profil (2), **caractérisé en ce qu'**il comprend en outre un couvercle (8) ajusté sur le décalage (6) du profil (2) couvrant le verrou (4) du moyen de fixation (3).

2. Silencieux de motocyclette ayant un élément de protection (1) selon la revendication 1, dans lequel ledit profil (2) possède une ouverture (5a) vers l'extérieur dans le renfoncement longitudinal (5) qui englobe toute sa longueur, pour un placement ou un retrait du moyen de fixation (3) à travers elle.

3. Silencieux de motocyclette ayant un élément de protection (1) selon l'une quelconque des revendications précédentes, dans lequel le moyen de fixation (3) consiste en une bride métallique ayant un verrou à vis d'ajustement hexagonal (4) ou une vis sans fin.

4. Silencieux de motocyclette ayant un élément de protection (1) selon l'une quelconque des revendications précédentes, dans lequel ces rainures de coupe transversales (7) sont situées et espacées à des distances équidistantes, près de l'extrémité du profil flexible (2) opposée au décalage (6) pour l'emplacement du verrou (4) du moyen de fixation (3).

5. Silencieux de motocyclette ayant un élément de protection (1) selon l'une quelconque des revendications précédentes, dans lequel le renfoncement longitudinal (5) du profil (2) pour placer le moyen de fixation (3), est situé dans la zone centrale du profil (2) et son ouverture vers l'extérieur (5a) dans la partie latérale de celui-ci.

6. Silencieux de motocyclette ayant un élément de protection (1) selon l'une quelconque des revendications précédentes, dans lequel le couvercle (8), est une partie faite du même matériau flexible que le reste du profil (2).

7. Silencieux de motocyclette ayant un élément de protection (1), selon l'une quelconque des revendications précédentes, dans lequel le couvercle (8) est couplé et emboîté sur le décalage (6) de l'extrémité dudit profil (2)

8. Silencieux de motocyclette ayant un élément de protection (1) selon l'une quelconque des revendications précédentes, dans lequel le couvercle (8) est joint de manière intégrale avec le corps du profil de protection (2) au moyen d'un pont de connexion flexible (9) pourvu entre les deux parties

9. Silencieux de motocyclette ayant un élément de protection (1) selon l'une quelconque des revendications précédentes, dans lequel le profil (2) possède une configuration plate au niveau de sa base inférieure (2a) avec deux extensions latérales (2b) dans ses côtés longitudinaux respectifs englobant toute sa longueur.
